# EUROPEAN PATENT APPLICATION

(11) **EP 4 092 076 A1**
(43) Date of publication of application: **23.11.2022**
(21) Application number: 21382468.3
(22) Date of filing: 21.05.2021
(51) Int. Cl.: C08K 5/50, C08K 3/34, C08K 5/134, C08K 5/3435, C08K 5/3492, C08K 13/02, C08L 23/16, C08L 23/12, C08K 5/00

(54) **HOUSEHOLD APPLIANCE WITH A HETEROPOLYOXOMETALATE CONTAINING COMPONENT PART AND PROCESS FOR THE MANUFACTURE OF THE COMPONENT PART**

(71) Applicant: BSH Hausgeräte GmbH, 81739 München (DE); BSH Electrodomésticos España, S.A., 50016 Zaragoza (ES)
(72) Inventor: Graus Almenar, Javier, 50002 Zaragoza (ES); Lazaro Villarroya, Guillermo Alberto, 50005 Zaragoza (ES); Sanz Naval, Javier, 50193 Zaragoza (ES)

(57) **Abstract**

The invention relates to a household appliance with a component part containing (a) at least one thermoplastic organic polymer and (b) at least one heteropolyoxometalate, wherein the component part comprises
(b) a heteropolyoxometalate of the formula (I), (II) and/or (III),

[A⁺]m [XZᵣZ'ₒO₄₀]^{m-} (I),

wherein
A⁺ is a quaternary phosphonium cation,
m- is the negative charge of the heteropolyoxometalate anion,
m is the number of the quaternary phosphonium cations required to compensate the negative charge m-,
Z and Z' are independently selected from W and Mo,
X is selected from P and Si,
r and o are integers in the range of from 0 to 12, and
r + o = 12;

[A⁺]ₘ [XZ_{q}Z'ₜO₂₄]^{m-} (II),

wherein
A⁺ is a quaternary phosphonium cation,
m- is the negative charge of the heteropolyoxometalate anion,
m is the number of the quaternary phosphonium cations required to compensate the negative charge m-,
Z and Z' are independently selected from W and Mo,
X is selected from P and Si,
q and t are integers in the range of from 0 to 4, and
q + t = 4;

XZᵣZ'ₒO₃₉(NH₂(CH₂)₃Si(OH)₃ (III),

wherein
Z and Z' are independently selected from W and Mo,
X is selected from P and Si,
r and o are integers in the range of from 0 to 12, and
r + o = 12;
wherein the cation A+ is a quaternary phosphonium cation with the formula (PR¹R²R³R⁴)⁺, wherein R¹ contains of from 8 to 20 carbon atoms and R², R³, and R⁴ independently from each other contain of from 1 to 7 carbon atoms.

(c) an alumino silicate mineral; and
(d) a free radical scavenger.

The invention relates moreover to a process for the manufacture of the component part.

## Description

The invention relates to a household appliance with a component part containing at least one organic polymer and a heteropolyoxometalate, and a process for the manufacture of the component part.

Household appliances and in particular their component parts containing a polymer may come into contact with dust, dirt, food or humidity or may be touched by animals or during use. Problems concerning hygiene may thus arise from microorganisms that can attach to household appliances and proliferate. In particular, contaminated and hygienically objectionable household appliances or at least household appliances having discolorations may result. In the worst case this may be even dangerous to health. Regular cleaning of a household appliance is thus recommended. However, convenience and effectiveness of such a cleaning may be determined by the kind and amount of the contamination. In some cases a biofilm may be formed or has already formed. Biofilms, which consist of organic substances such as microorganisms and nutrients, lead to bad odor and/or visible contamination.

This is in particular the case for household appliances which come into contact with food stored, processed or prepared inside the household appliance. Also vacuum cleaners tend to exhibit contamination with microorganisms.

In general, articles which have been soiled in various ways are cleaned in water-bearing household appliances. Food remains arise in dishwashers and the range of dirt occurring in laundry items to be cleaned in washing machines is typically even greater. Something that all water-bearing household appliances have in common is that in the damp and warm atmosphere, in particular at less accessible sites, dirt can arise and accumulate. This dirt may be a good nutrient medium for organisms such as bacteria or fungi. Microorganisms tend to grow faster and easier in a damp atmosphere, in particular at less ventilated sites that are often also less accessible. For example condensed water in a fridge may support the growth of microorganisms. Reservoirs for liquids such as water and milk, e.g. in coffee machines, are prone to the growth of microorganisms.

Various measures for removing and/or preventing biofilms are known from the prior art. Machine cleaning programs are offered which remove built-up dirt at high temperatures with the assistance of washing agents and sometimes with increased liquor levels and/or at raised drum rotation speeds, i.e. with an increased input of mechanical energy. Also known is the use of ozone to remove organic dirt.

Photocatalytic methods are also known, for example the use of catalytically effective compounds, in particular titanium dioxide coatings for deodorizing, disinfecting and cleaning. Hereby, the catalyst needs to be often activated by means of UV radiation. These compounds support the oxidative modification or destruction of microorganisms, such that they are removed in the best case in total by oxidation. Often this method works however insufficiently, in particular if UV light is required in addition for the oxidation.

Further disadvantages of these known methods and measures are the high energy usage and the sometimes high apparatus and/or operating costs for achieving remarkable effects. In some methods, potentially health-endangering agents, for example ozone or UV radiation, are used so that additional safety measures are required.

The use of (hetero)polyoxometalates as antimicrobial active ingredients in the surfaces of household appliances, especially in surfaces of component parts is known.

The publications EP 2 761 073 B1 and US 2014/231363 A1 disclose a water-bearing domestic appliance having a container for receiving objects to be cleaned and at least one inner surface containing a catalytically active substance, said surface being disposed inside the domestic appliance, wherein the catalytically active substance is a polyoxometalate. The inner surface comes into contact with water to be cleaned during operation of the domestic appliance. Preferably the polyoxometalate is tungstate and more preferably, the tungstate is modified by titanium.

The publications DE 10 2013 205 302 A1 and WO 2014/154432 A1 disclose a household appliance which comprises at least one catalytically effective substance in a surface, wherein the catalytically effective substance is a polyoxometalate that is comprised in an inner and/or outer surface of the household appliance, provided that the polyoxometalate is comprised at least in an outer surface of the household appliance if the household appliance is a water-bearing household appliance having a container for receiving objects to be cleaned.

The publication WO 2014/122225 A1 discloses the use of a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
index q = 0, 1, 2 or 3, and
A is selected from one or more cations and comprises at least one cation selected from the group consisting of quaternary ammonium cations, quaternary phosphonium cations and tertiary sulfonium cations for providing self-cleaning, stripping, disinfecting, self-sanitizing, biocidal, antimicrobial, and/or deodorizing properties to at least part of a substrate or a surface of a substrate or to a coating or for decomposition and/or degradation of organic materials. In Formula (I), Z is preferably Mo and q = 2, and in Formula (III), Z is preferably W.

The publication EP 2 765 136 A1 discloses a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
q is 1, 2 or 3, and
A is selected among one or more cations and comprises at least one quaternary ammonium cation with the proviso that the compounds [(n-C₄H₉)₄N]₃PMo₁₂O₄₀ and [(n-C₆H₉)₄N]₃PMo₁₂O₄₀ are exempted. Most preferred are the heteropolyoxometalates [(n-C₄H₉)₄N]₃PW₄O₂₄ and [(n-C₆H₁₃)₄N]₃PW₄O₂₄.

However, the incorporation of polyoxometalates into polymers is difficult. If a coating approach is used, for example a component part containing a coating, most of the commercial coating systems react with the polyoxometalate producing side reactions. This leads to a degradation of either the polyoxometalate or the coating system. Coatings in the case of such a polyoxometalate incorporation become fragile and can be easily removed from a polymeric support, i.e. a polymer substrate. If a bulk approach is used, most of the polyoxometalates that are active as biocide agents degrade because of the harsh operating conditions that are needed for polymers to be processed. As an example, during the injection molding of polypropylene, the minimum temperature for the melting of polypropylene is 180°C and the pressure is above atmospheric pressure. Experiments have shown that 80% of the used polyoxometalate degraded under these conditions. Moreover, the amount of polyoxometalate in the surface of a component part is often too low to allow an efficient antimicrobial use, since the percentage of the polyoxometalate that resists both methodologies and that is available in the surface of the component part is often not sufficient.

The publication EP 3 459 423 B1 discloses therefore a household appliance with a component part containing a polymer and at least one polyoxometalate, wherein the polyoxometalate is anchored to a silica containing substrate.

The present inventors have moreover found that when a polyoxometalate is incorporated into an organic polymer, a faster degradation of the organic polymer occurs. This is detrimental for the use of such a polyoxometalate modified polymer material which is especially true for the application in household appliances.

In view of this situation it was an object of the present invention to provide a household appliance with a component part containing at least one organic polymer and a heteropolyoxometalate which shows improved chemical stability. Preferably, the chemical stability of both the heteropolyoxometalate and the organic polymer should be improved. In particular, there should be also less degradation during the manufacture of the household appliance and in particular the manufacture of component parts that contain these heteropolyoxometalates. Moreover, it was an object of the present invention to provide a household appliance wherein the faster degradation of the organic polymer due to the presence of a heteropolyoxometalate can be reduced. In addition, hygiene over a long time should be improved. A sufficient amount of polyoxometalate should be stably incorporated into the component part containing an organic polymer such that the formation of biofilms and the growth of bacteria can be reduced. An object of the present invention was also to provide a process for the manufacture of the component part.

This object is achieved according to the present invention with a household appliance and a process for producing a component part with the features of the corresponding independent claims. Preferred embodiments of the household appliance and the process for producing the component part are disclosed in the corresponding dependent claims. Preferred embodiments of the household appliance correspond to preferred embodiments of the process for the manufacture of the component part, and vice versa, even if not explicitly stated herein.

The invention is thus directed to a household appliance with a component part containing
(a) at least one organic polymer and (b) at least one heteropolyoxometalate, wherein the component part comprises
(b) a heteropolyoxometalate of the formula (I), (II) and/or (III),

   [A⁺]ₘ [XZᵣZ'ₒO₄₀]^{m-} (I),

   wherein
   A⁺ is a quaternary phosphonium cation,
   m- is the negative charge of the heteropolyoxometalate anion,
   m is the number of the quaternary phosphonium cations required to compensate the negative charge m-,
   Z and Z' are independently selected from W and Mo,
   X is selected from P and Si,
   r and o are integers in the range of from 0 to 12, and
   r + o = 12;
   [A⁺]ₘ [XZ_{q}Z'ₜO₂₄]^{m-} (II),

   wherein
   A⁺ is a quaternary phosphonium cation,
   m- is the negative charge of the heteropolyoxometalate anion,
   m is the number of the quaternary phosphonium cations required to compensate the negative charge m-,
   Z and Z' are independently selected from W and Mo,
   X is selected from P and Si,
   q and t are integers in the range of from 0 to 4, and
   q + t = 4;

   XZᵣZ'ₒO₃₉(NH₂(CH₂)₃Si(OH)₃ (III),

   wherein
   Z and Z' are independently selected from W and Mo,
   X is selected from P and Si,
   r and o are integers in the range of from 0 to 12, and
   r + o = 12;
   wherein the cation A⁺ is a quaternary phosphonium cation with the formula (PR¹R²R³R⁴)⁺, wherein R¹ contains of from 8 to 20 carbon atoms and R², R³, and
   R⁴ independently from each other contain of from 1 to 7 carbon atoms.
(c) an alumino silicate mineral; and
(d) a free radical scavenger.
R², R³, and R⁴ are preferably identical.

The inventors of the present invention have found that when the aforementioned heteropolyoxometalate is incorporated into the polymer with a specific free radical scavenger, the same antibiofilm performance and an improved polymer stability can be obtained. This is surprising because according to common sense, the free radical scavenger should either inhibit the biocide benefit or should be inefficient to protect the plastic.

The term "microorganisms", as referred to herein, include bacteria, viruses, fungi and algae. Preferably, the term "microorganisms", as used herein, refers to bacteria.

The term "biofilm", as used herein, refers to an assembly of microorganisms wherein cells stick to each other on the surface of a component part in or on a home appliance. The term "growth of biofilm" or "biofilm growth", as used herein, refers to the microorganism built-up adhering to a surface of a component part in or on a home appliance.

The term "home appliance" as used herein, refers to devices which are intended to be used in private household applications, also including communication and data processing devices, which are suitable und intended to interact with the devices for private household applications. In particular, the following household applications are included: stoves, ovens, baking ovens, microwaves, hobs, cooker hoods, dishwashers, laundry machines, dryers, refrigerators, freezers, vacuum cleaners, coffee machines, water boilers, plant oil cookers, irons, hair dryers, shavers, kitchen machines and kitchen devices, barbeque devices, steam cookers, electrical small instantaneous water heaters, devices for heating and storing water for the kitchen and the bathroom as well as robotic applications insofar they are intended for private household applications.

The household appliance is preferably a water-bearing household appliance. In general, a water-bearing household appliance is a household appliance during the operation of which water is used. The items to be cleaned can be, in particular, tableware or laundry items. Cleaning should according to the invention also be understood to mean freshening. Accordingly, a water-bearing household appliance can be also a dryer.

In a preferred embodiment, the water-bearing household appliance is a dishwasher or a laundry treatment device or a coffee making machine.

In another preferred embodiment, the water-bearing household appliance is belonging to the group consisting of a washing machine, a washer-dryer and a dryer.

Accordingly, the term "component part" is to be understood broadly. Depending on the household appliance concerned it may differ considerably in shape and composition.

The component part contains at least one organic polymer. In a preferred embodiment of the household appliance of the present invention, the component part comprises a thermoplastic, an elastomer, a thermoplastic elastomer, a duroplast, or a mixture thereof.

The term "thermoplastic", as used herein, refers to a polymer that becomes pliable or moldable above a specific temperature and solidifies upon cooling. Examples for thermoplastic polymers include but are not limited to polyacrylates, acrylonitrile-butadiene-styrenes, polyamides such as nylon, polyacetic acid, polybenzimidazole, polycarbonate, polyether sulfone, polyetherether ketone (PEEK), polyetherimide, polyethylene, polyphenylene oxide, polyphenylene sulfide (PPS), polypropylene, polystyrene, polyvinylchloride (PVC), polyethyleneterephthalate, polyurethane, polyester and polytetrafluoroethylene (e.g. Teflon).

The term "elastomer", as used herein, refers to a polymer with viscoelasticity (having both viscosity and elasticity). Examples for elastomers include but are not limited to unsaturated rubbers such as natural polyisoprene (natural rubber), synthetic polyisoprene, polybutadiene, chloroprene rubber, butyl rubber, styrene-butadiene rubber, (hydrogenated) nitrile rubber, saturated rubbers such as ethylene propylene rubber, ethylene propylene diene rubber, epichlorohydrin rubber, polyacrylic rubber, silicone, silicone rubber, fluorosilicone rubber, fluoro- and perfluoroelastomers, and ethylene-vinyl acetate.

The term "thermoplastic elastomer", as used herein, refers to a class of copolymers or a physical mix of polymers which consists of materials with both thermoplastic and elastomeric properties. Examples for thermoplastic elastomers include but are not limited to styrenic block copolymers, polyolefin blends, elastomeric alloys, thermoplastic polyurethanes, thermoplastic copolyesters, and thermoplastic polyamides.

The term "duroplast", as used herein, refers to a polymer which is no longer pliable after curing. Examples for duroplasts include but are not limited to aminoplasts, phenoplasts, epoxy resins, polyacrylates, polyurethanes, polyesters, urea formaldehyde resins, melamine formaldehyde resins, and phenol formaldehyde resins.

In a more preferred embodiment of the present invention, the component part of the household appliance comprises a polymer selected from the group consisting of polypropylene, polyethylene, polyethyleneterephthalate, other polyesters, polyamides, polyurethanes, polyacrylates, polycarbonate, polystyrene, polyimides, polymethacrylates, polyoxoalkylenes, poly(phenylene oxides), polyvinylesters, polyvinylethers, polyvinylidene chloride, acrylonitrile-butadiene-styrene, natural and synthetic polyisoprene, polybutadiene, chloroprene rubber, styrene-butadiene rubber, tetrafluoroethylene, silicone, acrylate resins, polyurethane resins, silicone resins, polyester resins, alkyd resins, epoxy resins, phenolic resins, and urea or amine based resins, or a mixture thereof.

More preferably, the at least one organic polymer is selected from among polypropylene, polyethylene, polyamide 11, 12, 66, PEEK, PPS, PVDF, PVC, polyester, polycarbonate, polyurethane, EPDC, polysulfone and polyether sulfone.

Accordingly, in a preferred household appliance of the present invention, the component part contains an organic polymer that is selected from the group consisting of polypropylene and an ethylene propylene diene monomer (EPDM) polymer.

Ethylene propylene diene monomer (EPDM) is a copolymer of ethylene, propylene and a small amount of non-conjugated diene monomers (3 - 9 percent) which provide crosslinking sites for vulcanization:

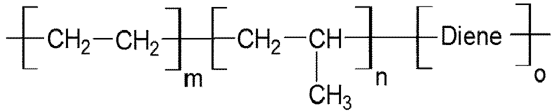

The diene is usually dicyclopentadiene, ethylidene nobornene, or 1,4 hexadiene. These terpolymers can be vulcanized by traditional techniques.

In the household appliance of the present invention, the alumino silicate mineral (c) is preferably a zeolite or a hallosyte. More preferably, the alumino silicate mineral is a hallosyte. A hallosyte is an alumino silicate mineral (aluminosilicate) with the formula Al₂Si₂O₅(OH)₄. The aluminasilicate and in particular hallosyte was found by the inventors to be a very useful carrier for the heteropolyoxometalate into the polymer matrix allowing better compatibility between the additive and the matrix. It also protects the heteropolyoxometalate during extrusion and injection processes by retaining it in its pores and reducing the shear forces that may destroy the heteropolyoxometalate molecule when allowing it to move freely. It was surprisingly found that a polymeric material, for example a component part of a household appliance that contains one of the aforementioned polyoxometalates and in particular hallosyte retains its biocidal properties after 24h of contact with detergents. Without the content of aluminosilicate, in particular the hallosyte, the polymeric material lost these biocidal properties.

In the household appliance of the present invention, the component part contains preferably, based on the total contents of the constituents (a), (b), (c) and (d),
34 wt.-% to 84.95 wt.-% at least one organic polymer (a);
5 wt.-% to 30 wt.-% heteropolyoxometalate (b);
10 wt.-% to 35 wt.-% alumino silicate mineral (c); and
0.05 wt.-% to 1 wt.-% free radical scavenger (d).

In a preferred embodiment of the household appliance, the component part contains, based on the total contents of the constituents (a), (b), (c) and (d),
54.5 wt.-% to 77.9 wt.-% of the at least one organic polymer (a);
7 wt.-% to 15 wt.-% heteropolyoxometalate (b);
15 wt.-% to 30 wt.-% alumino silicate mineral (c); and
0.1 wt.-% to 0.5 wt.-% free radical scavenger (d).

In the component part of the household appliance of the present invention it is preferred that the polyoxometalate is contained at least in a surface layer that has a thickness of from 0.01 to 0.5 mm. It is moreover preferred that the surface layer has a polyoxometalate content in the range of from 1 to 50 wt.%, based on the weight of the surface layer.

In a preferred embodiment of the household appliance of the present invention, the free radical scavenger is a hindered amine light stabilizer (HALS), a hindered benzoate or a combination thereof. A hindered amine light stabilizer (HALS) is most preferred.

According to the present invention, the heteropolyoxometalate used in the household appliance is preferably of the formula (I'), (II') and/or (III'),

[A⁺]ₘ [XMo₁₂O₄₀]^{m-} (I'),

wherein
A⁺ is a quaternary phosphonium cation,
m- is the negative charge of the heteropolyoxometalate anion,
m is the number of the quaternary phosphonium cations required to compensate the negative charge m-,
X is selected from P and Si;

[A⁺]ₘ [XMo₄O₂₄]^{m-} (II'),

wherein
A⁺ is a quaternary phosphonium cation,
m- is the negative charge of the heteropolyoxometalate anion,
m is the number of the quaternary phosphonium cations required to compensate the negative charge m-,
X is selected from P and Si;

XMo₁₂O₃₉(NH₂(CH₂)₃Si(OH)₃ (III'),

wherein
X is selected from P and Si;
wherein the cation A⁺ is a quaternary phosphonium cation with the formula (PR¹R²R³R⁴)⁺,
wherein R¹ contains of from 8 to 20 carbon atoms and R², R³, and R⁴ independently from each other contain of from 1 to 7 carbon atoms.

In a preferred embodiment of the household appliance, X is Si. More preferably, the polyoxometalate is selected from among [(CH₃(CH₂)₁₃P⁺(CH₂CH₂CH₂CH₃)]₄[SiMo₁₂O₄₀] (an example of a Keggin form), [(CH₃(CH₂)₁₃P⁺(CH₂CH₂CH₂CH₃)]₄[SiMo₄O₂₄] (an example of a Venturello form) and [(CH₃(CH₂)₁₃P⁺(CH₂CH₂CH₂CH₃)]₄[SiMo₁₂O₃₉ (H₂N(CH₂)₃Si(OH)₃)] (an example of an anchorable form).

The heteropolyoxometalates described herein have shown to have desirable characteristics useful for simultaneously imparting antimicrobial properties to a component part in or on a home appliance and reducing the growth of a biofilm on the surface of the substrate in or on a home appliance. These heteropolyoxometalates consist in general of a cationic moiety A⁺, which imparts antimicrobial activity to the compound, and the heteropolyoxometalate anion. The heteropolyoxometalates show a flexible redox behavior, which means that they can be reversibly reduced by one or more electrons. In particular, it has been found that these heteropolyoxometalates, when incorporated into a component part of a home appliance, have the ability to activate molecular oxygen and/or hydrogen peroxide, preferably molecular oxygen, which means that an electron is transferred from the heteropolyoxometalate to molecular oxygen and/or hydrogen peroxide, preferably molecular oxygen, resulting in the formation of reactive oxygen species (ROS) such as the hyperoxide anion (O₂⁻) and an oxidized heteropolyoxometalate species.

The reactive oxygen species formed by heteropolyoxometalate-induced activation of molecular oxygen and/or hydrogen peroxide, preferably of molecular oxygen, reduces the growth of a biofilm on a surface of a substrate in or on a home appliance comprising the heteropolyoxometalate. This, in turn, is useful for maintaining the microbial activity of the component part used in a home appliance resulting from the at least one heteropolyoxometalate comprised therein on a long term time scale.

The cationic moiety A⁺ the oxidized heteropolyoxometalate species then reacts with the negatively charged cell membrane of a microorganism thereby killing the microorganism, resulting in an antimicrobial activity of the heteropolyoxometalate and the component part used in a home appliance comprising the heteropolyoxometalate, respectively.

The heteropolyoxometalates used in the present invention thus provide a synergistic effect. They have antimicrobial properties because of their ability to react with the cell membranes of microorganisms, and they have the ability to generate reactive oxygen species (ROS), in particular the hyperoxide anion (O₂⁻), that reduces the growth of a biofilm on the surface of the component part in or on a home appliance comprising the heteropolyoxometalate, with the result that the antimicrobial activity of the substrate used in a home appliance is maintained for a long term.

Generally, polyoxometalates based on molybdenum (Mo) or tungsten (W) are known in the art, in particular as Keggin-type heteropolyoxometalate anions [XZ₁₂O₄₀]ⁿ⁻ wherein the central heteroatom (X) can be e.g. phosphorus (P⁵⁺), silicon (Si⁴⁺), germanium (Ge⁴⁺), aluminum (Al³⁺), boron (B³⁺) etc.. Further, in the Keggin-type polyoxometalate based on molybdenum or tungsten a number (1 or more) of molybdenum or tungsten atoms can be replaced by titanium atoms (e.g. Ti⁴⁺), vanadium atoms (e.g. V⁵⁺), nickel atoms (e.g. Ni²⁺), iron atoms (e.g. Fe³⁺), cobalt atoms (e.g. Co²⁺ or Co³⁺), zinc atoms (Zn²⁺), chromium atoms (e.g. Cr²⁺ or Cr³⁺), manganese atoms (e.g. Mn²⁺) etc. Another example of polyoxometalate anions is the Venturello structure [XZ₄O₂₄].

All heteropolyoxometalates described herein have molybdenum or tungsten oxide subunits which can be replaced in parts by titanium, vanadium, manganese, iron, cobalt, nickel or chromium oxide subunits.

The heteropolyoxometalates of formulae (I), (II), and (III) and sub-formulae thereof as described herein can be prepared according to known processes.

The phosphonium cations A⁺ are selected such that in the heteropolyoxometalate the charge of the compound of the Formula (I), (II), and (III), as well as (I') and (II') is zero.

Optionally at least two of the residues R¹, R², R³ and R⁴ in the phosphonium cation A⁺ are part of a ring or form a ring together with the phosphor atom. R¹, R², R³ and R⁴ may be branched or straight, saturated or unsaturated, substituted or unsubstituted alkyl groups, aryl groups or heteroaryl groups.

These cations have antimicrobial properties contributing to the antimicrobial properties of the overall heteropolyoxometalate species and to its ability to reduce the biofilm growth on the surface of a substrate in or on a home appliance.

The presence of a quaternary phosphonium cation also renders the heteropolyoxometalates as described herein less soluble or even insoluble in water. Preferably, the solubility of the heteropolyoxometalates used for the present invention is below 10 mg/l, preferably below 1 mg/ml in water at 20 °C, more preferably below 0.1 mg/ml water, in particular below 0.01 mg/ml water.

The lower solubility or even insolubility for aqueous liquids also contributes to the long term efficacy of the heteropolyoxometalate as described herein regarding the reduction of the biofilm growth on the surface of a component part in or on a home appliance and antimicrobial activity since they are not washed out of the component part used in a home appliance over time upon exposure to water or moisture.

R¹ may be for example octyl, nonyl, decyl, undecyl, dodecyl, tridecyl, tetradecyl, pentadecyl, hexadecyl, heptadecyl, octadecyl, nonadecyl, eicosanyl alkyl residues. R¹ is preferably straight.

R², R³ and R⁴ independently include methyl, ethyl, propyl, butyl, pentyl, hexyl, and heptyl alkyl residues.

A household appliance is preferred, wherein at least one of the groups R¹, R², R³, and R⁴ is a substituted or nonsubstituted alkyl, alkyloxoalkyl or cycloalkyl group that may contain at least one heteroatom selected among O, S, N and P.

Preferred quaternary phosphonium cations are the cations methyltrioctylphosphonium, tributyltetradecylphosphonium, tributyldodecylphosphonium, trihexyltetradecylphosphonium, trihexylhexadecylphosphonium, tributyloctylphosphonium, tributylnonylphosphonium, tributyldecylphosphonium, tributylundecylphosphonium, tributyldodecylphosphonium, tributyltridecylphosphonium, tributyltetradecylphosphonium, tributylpentadecyl-phosphonium, tributylhexadecylphosphonium, trihexyloctylphosphonium, trihexylnonylphosphonium, trihexyldecylphosphonium, trihexylundecyl-phosphonium, trihexyldodecylphosphonium, trihexyltridecylphosphonium, trihexyltetradecylphosphonium, trihexylpentadecylphosphonium and trihexylhexadecylphosphonium.

It was found that the use of the phosphonium cations described herein is very advantageous as compared to for example corresponding ammonium cations. This might perhaps be related to the temperatures used in the extrusion of the polymer. For example, the extrusion or injection moulding of polypropylene is conducted at temperatures > 180 °C, but ammonium cations degrade in general at >140 °C.

In a preferred embodiment of the present invention, a household appliance is preferred, wherein in the phosphonium cation R¹ contains at least 8, more preferably at least 10, and most preferably at least 13 carbon atoms.

A household appliance is moreover preferred, wherein R², R³, and R⁴ independently from each other contain of from 1 to 4 carbon atoms.

The most preferred phosphonium cation was the tetradecyltributylphosphonium cation which has been found to be the best phosphonium cation with respect to its biocidal performance.

The invention is moreover directed to a process for the manufacture of a component part of a household appliance, containing at least polymer and at least one heteropolyoxometalate, wherein the process comprises the steps:
(i) mixing the polyoxometalate (b) with the alumino silicate mineral (c);
(ii) mixing at least one organic polymer (a) in a molten or viscous state with the mixture obtained in step (i) and a free radical scavenger (d); and
(iii) injection-molding or extruding the mixture obtained in step (ii) to form the component part.

In a preferred process for the manufacture of a component part, the organic polymer (a) is polypropylene and the steps (ii) and (iii) are performed at a temperature of between 190 to 210 °C for 1 to 10 minutes.

Methods for the manufacture of a component part might require to subject the polymer (a) and the constituents (b), (c) and (d) to compounding processes, pressureless processing techniques (e.g. casting, dipping, coating, foaming) or compression molding, rolling and calendaring, extrusion, blow molding or injection molding processes or drawing, thermoforming or printing for forming a desired component part.

The present invention has several advantages. In the household appliance of the present invention, the polyoxometalate which is used in component parts because of its antimicrobial properties can be incorporated therein in an improved manner. The stability of the polymer matrix is improved over known component parts that contain an organic polymer and a heteropolyoxometalate. The present invention provides a component part of a household appliance with the surprising combination of biocidal or antibiofilm properties and a lack of oxidation of the polymer, in particular when PP or EPDM are used.

Moreover, in embodiments of the present invention less polyoxometalate is necessary to obtain a component part with the same antimicrobial efficiency. In addition, other negative side effects that occur upon the degradation of polyoxometalates as for example unwanted colour changes can be avoided. Operational costs for the manufacturing process can be reduced because less polyoxometalate has to be used for the manufacture of a component part with the same biocide effect. In embodiments of the invention it is even possible to avoid any thermal or chemical degradation of the polyoxometalate. Thus, the oxygen radicals, which disinfect the interior of the household appliance, can be produced easily and continuously.

The invention has moreover the advantage that a household appliance with improved hygiene is made available in a simple and cost-effective manner. In particular, this is advantageous in the case of a water-bearing household appliance which has a markedly lower susceptibility to dirt especially involving microorganisms.

The phosphonium cations used in the present invention allow to maintain the polyoxometalate in the component part and to prevent dissolution into a surrounding liquid or gaseous medium or any other depletion because of the contact with a surrounding medium.

The heteropolyoxometalates used in the household appliance of the present invention surprisingly show at the same time antimicrobial properties and a reduction in the growth of a biofilm, as well as the avoidance of an oxidation of the polymer matrix when tested as additive in polymer containing samples, especially component parts of a household appliance.

### EXAMPLES AND COMPARATIVE EXAMPLES

Manufacture of polymer containing sheets as examples for component parts of a household appliance

The polymer sheets of the EXAMPLES and the COMPARATIVE EXAMPLES were produced by extrusion of polypropylene (PP) at a temperature of 200 °C with a residence time of 4 min and at 90 rotations per minute (rpm).

### EXAMPLES

In the extruder, the PP was mixed with a mixture of one of the following polyoxometalates and halloyste as carrier, as well as with the antioxidant CYASORB UV-3529.

The composition of each sheet was a follows:
70 wt.-% polypropylene
10 wt.-% heteropolyoxometalate
19.8 wt.-% hallosyte
0.2 wt.-% CYASORB^{®} UV-3529

CYASORB^{®} UV-3529 of SOLVAY is based on hindered amine light stabilizer (HALS) chemistry. According to SOLVAY it has the chemical composition:
1,6-Hexanediamine, N,N'-bis(2,2,6,6-tetramethyl-4-piperidinyl)-, polymers with morpholine-2,4,6-trichloro-1,3,5-triazine reaction products methylated

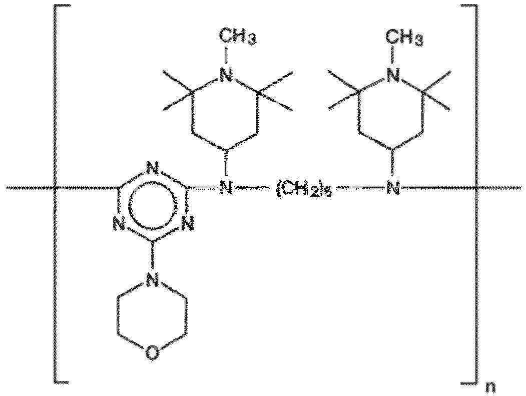

The following three heteropolyoxometalates were used in the EXAMPLES:

[(CH₃(CH₂)₁₃P⁺(CH₂CH₂CH₂CH₃)]₄[SiMo₁₂O₄₀],

[(CH₃(CH₂)₁₃P⁺(CH₂CH₂CH₂CH₃)]₄[SiMo₄O₂₄]

and

[(CH₃(CH₂)₁₃P⁺(CH₂CH₂CH₂CH₃)]₄[SiMo₁₂O₃₉(H₂N(CH₂)₃Si(OH)₃)].

The polymer sheets of the EXAMPLES were evaluated regarding their biocidal effect, i.e. E. Coli biofilm reduction, by comparison with a reference with virgin polypropylene as COMPARATIVE EXAMPLE. In this regard the following classification was used.
Biofilm Level 1: Single bacteria (attached bacteria without aggregates)
Biofilm Level 2: Cell-cell adhesion (first aggregates or mono-layer)
Biofilm Level 3: Bacteria clustering (multiple aggregates or multi-layers)
Biofilm Level 4: Young biofilm (clusters with live/dead bacteria)
Biofilm Level 5: Mature biofilm (very high density of live/dead bacteria clusters)

The three sheets according to the present invention, i.e. the ones of the EXAMPLES, all showed Biofilm Level 1 behavior while the sheet of the COMPARATIVE EXAMPLE with polypropylene as such showed Biofilm Level 5 behavior. Results have been obtained using an optical microscope and specific fluorescence labels to the biofilm. The used methodology was created by combining two independent protocols:
(a) ASTM E2196-12; and
(b) Publication, Quantification of biofilm in microtiter plates: overview of testing conditions and pracrtical recommendations for assessment of biofilm production by staphylococci. STEPANOVIC, Srdjan, et al.

Namely, the antibiofilm properties were evaluated according to an internal protocol based on the ASTM E2196-12 standard (Standard Test - "Method for Quantification of Pseudomonas aeruginosa Biofilm Grown with Medium Shear and Continuous Flow Using Rotating Disk Reactor"). The main steps were as follows:
- Preparation of an inoculum of E. Coli ATCC 8736 in peptone water (106 UFC/ml)
- Cleaning of the samples with ethanol and distilled water
- Contamination of the samples by immersion in the inoculum solution
- Incubation of the samples for 48 h at 37 °C
- Removal of the samples and raise with PBS buffer
- Application of the LIVE/DEAD^{®} solution to dye bacteria on the surface of the sample
- Prospecting the samples under an epifluorescence microscope to check the biofilm level (from 1 to 5, see above)

To confirm the results, 3 replicates of each sample were analyzed on different days. It was surprisingly found that a polymeric sheet, for example a component part of a household appliance that contains one of the aforementioned heteropolyoxometalates and hallosyte retains its biocidal properties after 24 h of contact with detergents. Without the hallosyte content, the polymeric sheet lost these biocidal properties.

Moreover, the following aging tests were conducted in the EXAMPLES based on standards for polypropylene AT-EN IS 6270-2. The tests were successfully passed by the samples according to the present invention; the results are shown in the Table.

**Table**

| **Tests** | **Time** | **Requirements to be fulfilled** |
|---|---|---|
| UV resistance | 250 h | No visible cracks when magnified 500 times with a microscope |
| Alternating Climate AF* | 21 cycles | No visible cracks when magnified 500 times with a microscope |
| Heating at 70 °C | 3 weeks | No visible cracks when magnified 500 times with a microscope |
| Brittle test | 200 h | No embrittling |

| | | |
|---|---|---|
| *Specific test designed to test the thermal fatigue resistance of a material. | | |

## Claims

1. A household appliance with a component part containing (a) at least one organic polymer and (b) at least one heteropolyoxometalate,
**characterized in that** the component part comprises
(b) a heteropolyoxometalate of the formula (I), (II) and/or (III),
[A⁺]ₘ [XZᵣZ'ₒO₄₀]^{m-} (I),
wherein
A⁺ is a quaternary phosphonium cation,
m- is the negative charge of the heteropolyoxometalate anion,
m is the number of the quaternary phosphonium cations required to compensate the negative charge m-,
Z and Z' are independently selected from Wand Mo,
X is selected from P and Si,
r and o are integers in the range of from 0 to 12, and
r + o = 12;
[A⁺]ₘ [XZ_{q}Z'ₜO₂₄]^{m-} (II),
wherein
A⁺ is a quaternary phosphonium cation,
m- is the negative charge of the heteropolyoxometalate anion,
m is the number of the quaternary phosphonium cations required to compensate the negative charge m-,
Z and Z' are independently selected from Wand Mo,
X is selected from P and Si,
q and t are integers in the range of from 0 to 4, and
q + t = 4;
XZᵣZ'ₒO₃₉(NH₂(CH₂)₃Si(OH)₃ (III),
wherein
Z and Z' are independently selected from Wand Mo,
X is selected from P and Si,
r and o are integers in the range of from 0 to 12, and
r + o = 12;
wherein the cation A+ is a quaternary phosphonium cation with the formula (PR¹R²R³R⁴)⁺, wherein R¹ contains of from 8 to 20 carbon atoms and R², R³, and R⁴ independently from each other contain of from 1 to 7 carbon atoms.
(c) an alumino silicate mineral; and
(d) a free radical scavenger.

2. Household appliance according to claim 1, wherein the alumino silicate mineral (c) is a zeolite or a hallosyte.

3. Household appliance according to claim 2, wherein the alumino silicate mineral is a hallosyte.

4. Household appliance according to any of claims 1 to 3, wherein the component part contains, based on the total contents of the constituents (a), (b), (c) and (d),
34 wt.-% to 84.95 wt.-% of the at least one organic polymer (a);
5 wt.-% to 30 wt.-% heteropolyoxometalate (b);
10 wt.-% to 35 wt.-% alumino silicate mineral (c); and
0.05 wt.-% to 1 wt.-% free radical scavenger (d).

5. Household appliance according to claim 4, wherein the component part contains, based on the total contents of the constituents (a), (b), (c) and (d),
54.5 wt.-% to 77.9 wt.-% of the at least one organic polymer (a);
7 wt.-% to 15 wt.-% heteropolyoxometalate (b);
15 wt.-% to 30 wt.-% alumino silicate mineral (c); and
0.1 wt.-% to 0.5 wt.-% free radical scavenger (d).

6. Household appliance according to any of claims 1 to 5, wherein R¹ contains at least 10, preferably at least 13 carbon atoms.

7. Household appliance according to any of claims 1 to 6, wherein R², R³, and R⁴ independently from each other contain of from 1 to 4 carbon atoms.

8. Household appliance according to any of claims 1 to 7, wherein the free radical scavenger is a hindered amine light stabilizer (HALS), a hindered benzoate or a combination thereof.

9. Household appliance according to any of claims 1 to 8, wherein the heteropolyoxometalate is of the formula (I'), (II') and/or (III'),
[A⁺]ₘ [XMo₁₂O₄₀]^{m-} (I'),
wherein
A⁺ is a quaternary phosphonium cation,
m- is the negative charge of the heteropolyoxometalate anion,
m is the number of the quaternary phosphonium cations required to compensate the negative charge m-,
X is selected from P and Si;
[A⁺]ₘ [XMo₄O₂₄]^{m-} (II'),
wherein
A⁺ is a quaternary phosphonium cation,
m- is the negative charge of the heteropolyoxometalate anion,
m is the number of the quaternary phosphonium cations required to compensate the negative charge m-,
X is selected from P and Si;
XMo₁₂O₃₉(NH₂(CH₂)₃Si(OH)₃ (III'),
wherein
X is selected from P and Si;
wherein the cation A⁺ is a quaternary phosphonium cation with the formula (PR¹R²R³R⁴)⁺, wherein R¹ contains of from 8 to 20 carbon atoms and R², R³, and R⁴ independently from each other contain of from 1 to 7 carbon atoms.

10. Household appliance according to claim 9, wherein X is Si.

11. Household appliance according to claim 10 wherein the heteropolyoxometalate is selected from among [(CH₃(CH₂)₁₃P⁺(CH₂CH₂CH₂CH₃)]₄[SiMo₁₂O₄₀], [(CH₃(CH₂)₁₃P⁺(CH₂CH₂CH₂CH₃)]₄[SiMo₄O₂₄] and [(CH₃(CH₂)₁₃P⁺(CH₂CH₂CH₂CH₃)]₄[SiMo₁₂O₃₉(H₂N(CH₂)₃Si(OH)₃)].

12. Household appliance according to any of claims 1 to 11, wherein at least one of the groups R¹, R², R³, and R⁴ is a substituted or nonsubstituted alkyl, alkyloxoalkyl or cycloalkyl group that may contain at least one heteroatom selected among O, S, N and P.

13. Household appliance according to any of claims 1 to 12, wherein the household appliance is a water-bearing household appliance.

14. Household appliance according to any of claims 1 to 13, wherein the component part contains an organic polymer that is selected from the group consisting of polypropylene and an ethylene propylene diene monomer (EPDM) polymer.

15. Process for the manufacture of a component part of a household appliance, containing at least one polymer and at least one heteropolyoxometalate, wherein the process comprises the steps:
(i) mixing the heteropolyoxometalate (b) with the alumino silicate mineral (c);
(ii) mixing at least one organic polymer (a) in a molten or viscous state with the mixture obtained in step (i) and a free radical scavenger (d); and
(iii) injection-molding or extruding the mixture obtained in step (ii) to form the component part.

16. Process for the manufacture of a component part according to claim 15, wherein the organic polymer (a) is polypropylene and the steps (ii) and (iii) are performed at a temperature of between 190 to 210 °C for 1 to 10 minutes.
